# EUROPÄISCHE PATENTSCHRIFT

(11) **EP 2 531 719 B1**
(45) Veröffentlichungstag und Bekanntmachung des Hinweises auf die Patenterteilung: **05.08.2015**
(21) Anmeldenummer: 10787370.5
(22) Anmeldetag: 29.11.2010
(51) Int. Cl.: F03B 17/06

(54) **WASSERKRAFTANLAGE**
HYDROELECTRIC POWER PLANT
CENTRALE HYDROÉLECTRIQUE

(30) Priorität: 04.02.2010 DE 202010001796 U
(43) Veröffentlichungstag der Anmeldung: 12.12.2012
(73) Patentinhaber: Stein HT GmbH Spezialtiefbau, 44653 Herne (DE)
(72) Erfinder: STEIN, Wilfried, 44653 Herne (DE)
(74) Vertreter: Nunnenkamp, Jörg
(86) Internationale Anmeldenummer: PCT/EP2010/068441
(87) Internationale Veröffentlichungsnummer: WO 2011/095240

(56) Entgegenhaltungen:
- EP-A1- 2 136 072
- JP-A- 2003 106 247
- US-A- 3 986 787
- US-A1- 2007 020 097
- US-A1- 2008 258 467
- US-B1- 7 466 035

## Beschreibung

Die Erfindung betrifft eine Wasserkraftanlage zum Erzeugen elektrischer Energie unter Umwandlung von Strömungsenergie eines strömenden Gewässers mittels einer Strömungsmaschine mit wenigstens einem Rotor, einem von dem Rotor angetriebenen Generator, einem Schwimmkörper, und mit einer Düseneinheit zur Erhöhung der Strömungsgeschwindigkeit im Bereich des Rotors, wobei die Düseneinheit wenigstens eine verstellbare Wand aufweist.

Bei einer Wasserkraftanlage des eingangs beschriebenen Aufbaus, wie sie in der US 2007/0020097 A1 beschrieben wird, ist insgesamt ein turbinenartiges Gehäuse realisiert. Dieses macht im Endeffekt von dem Venturieffekt Gebrauch und verfügt im Inneren über einzelne verstellbare Wände. Zwar ist eine schwimmende Auslegung vorgesehen. Weitergehende Anpassungen insbesondere des Rotors sind jedoch nicht möglich.

Eine Wasserkraftanlage wird auch in der US 4 868 408 vorgestellt. Hierbei handelt es sich insgesamt um eine tragbare Strömungsmaschine, die beispielsweise mit Hilfe eines Ankers in einem Flussbett festgelegt wird. Dem dortigen Rotor ist eine Düseneinheit ähnlich derjenigen bei einem Flugzeug zugeordnet, um einen konvergierenden und divergierenden Fluss unter Ausnutzung des Venturi-Effektes im Bereich des Rotors zu erzeugen.

Bekanntermaßen beschreibt der Venturi-Effekt das Phänomen, dass sich die Fließgeschwindigkeit eines durch ein Rohr bzw. in vorliegendem Fall durch ein Flussbett bzw. die Düseneinheit strömenden Gewässers zu einem sich verändernden Querschnitt umgekehrt proportional verhält. D. h., die Strömungsgeschwindigkeit ist dort am größten, wo der Strömungsquerschnitt am kleinsten ist. Dies nutzt die Düseneinheit aus, indem der Rotor üblicherweise im Bereich des geringsten Querschnittes der Düseneinheit platziert wird, um in diesem Bereich die Strömungsgeschwindigkeit zu erhöhen (Verengungsquerschnitt). Tatsächlich muss das strömende Gewässer eine auf diese Weise gebildete Engstelle mit dem gleichen Durchfluss passieren, wie den Rest der Düseneinheit. Dies wird üblicherweise dadurch erreicht, dass die Düseneinheit in Strömungsrichtung vor der Engstelle konvergiert und danach divergiert.

Ganz abgesehen davon beschreibt die WO 2004/051079 A1 eine Wasserkraftanlage, bei welcher die Strömungsmaschine unterhalb der Gewässeroberfläche der Gewässer im Schwebezustand gehalten wird. Dazu lässt sich der Schwimmkörper wahlweise mit einem gasförmigen Medium beaufschlagen und gegebenenfalls mit Wasser fluten.

Im Rahmen der EP 2 136 072 A1 geht es um eine Wasserkraftanlage, die mit einem geschlossenen Gehäuse mit darin ausgebildetem Kanal ausgerüstet ist. In den Kanal tauchen Rotoren mit einer Vielzahl an Rotorblättern ein.

Schließlich befasst sich die JP 2003 106 247 A mit einer Wasserturbine, die beidseitig eines schmalen Flusses im Berg oder dergleichen installiert werden kann. Zu diesem Zweck ist ein Rotor mit einer Vielzahl halbzylindrischer Rotorblätter realisiert. Der fragliche Rotor lässt sich vertikal gegenüber der Wasseroberfläche verstellen. Dazu ist eine Windenanordnung vorgesehen.

Der bekannte Stand der Technik hat sich grundsätzlich bewährt, trägt jedoch den geografischen Gegebenheiten bzw. der Wasseroberfläche nicht ausreichend Rechnung. So können beispielsweise unterschiedliche Wasserstände und/oder Strömungsgeschwindigkeiten dazu führen, dass die erzeugte elektrische Energie starken Schwankungen unterworfen ist. Zwar werden im Stand der Technik Möglichkeiten angesprochen, den Rotor bzw. die gesamte Strömungsmaschine zuverlässig im Schwebezustand unterhalb der Gewässeroberfläche zu halten. Auch verstellbare Rotoren sind bekannt. Allerdings kann hierdurch den sich ändernden Strömungsgeschwindigkeiten bei beispielsweise unterschiedlichen Wasserständen nur sehr eingeschränkt Rechnung getragen werden. Hier will die Erfindung insgesamt Abhilfe schaffen.

Der Erfindung liegt das technische Problem zugrunde, eine derartige Wasserkraftanlage zum Erzeugen elektrischer Energie unter Umwandlung von Strömungsenergie eines strömenden Gewässers mittels einer Strömungsmaschine so weiterzuentwickeln, dass die erzeugte elektrische Energie ausgangsseitig vergleichmäßigt wird und insbesondere Schwankungen des Wasserstandes und/oder der Fließgeschwindigkeit des Gewässers einfach beherrscht werden können.

Zur Lösung dieser technischen Problemstellung schlägt die Erfindung bei einer gattungsgemäßen Wasserkraftanlage vor, dass der Rotor dreidimensional verstellbar gegenüber der Düseneinheit ausgelegt ist, um hierdurch einerseits den Rotor immer unterhalb einer Wasseroberfläche anzuordnen und andererseits in etwa mittig im Vergleich zu der Düseneinheit. Hierdurch kann die erfindungsgemäße Wasserkraftanlage beispielsweise unterschiedlichen Wasserständen und/oder Strömungsgeschwindigkeiten des Gewässers ausreichend Rechnung tragen.

Tatsächlich lässt sich nämlich mit Hilfe dieser verstellbaren Wand beispielsweise ein Eingangsquerschnitt der Düseneinheit verändern. Nimmt die Wassermenge des strömenden Gewässers ab, so wird man regelmäßig den Eingangsquerschnitt vergrößern, um den Fluss durch die Düseneinheit möglichst konstant zu halten, also die Menge an durch die Düseneinheit fließendem Wasser pro Zeiteinheit.

Unabhängig davon besteht mit Hilfe der verstellbaren Wand auch die Option, den Verengungsquerschnitt der Düseneinheit, also die engste Stelle, zu variieren. D. h., je nach Strömungsgeschwindigkeit des Gewässers und/oder der durch die Düseneinheit fließenden Wassermenge kann der Verengungsquerschnitt so variiert werden, dass die Strömungsgeschwindigkeit im Bereich des Verengungsquerschnittes und folglich im Bereich des Rotors im Wesentlichen konstant bleibt. Dabei ist es sogar denkbar, den Eingangsquerschnitt und/oder den Verengungsquerschnitt im Sinne einer Regelung so zu verändern, dass die Strömungsgeschwindigkeit im Bereich des Rotors nahezu konstant bleibt. Als Folge hiervon ist dann auch mit einer relativ durchgängig gleichen Abgabe an elektrischer Energie seitens des Rotors zu rechnen. Dazu ist es lediglich erforderlich, die Strömungsgeschwindigkeit im Bereich des Rotors zu messen und bei einer Veränderung den Eingangsquerschnitt und/oder den Verengungsquerschnitt der Düseneinheit entsprechend anzupassen.

Um dies im Detail zu erreichen, ist die Düseneinheit mit wenigstens einer verstellbaren Wand ausgerüstet. Meistens verfügt die Düseneinheit über eine trogartige Gestalt und ist mit einem Boden und seitlichen Wänden ausgerüstet. D. h., die Düseneinheit ist nicht geschlossen, sondern nach oben hin offen und verfügt regelmäßig über einen U-förmigen Querschnitt.

Auf diese Weise bleibt der in den offenen Trog eingehängte Rotor von der Wasseroberfläche her unverändert zugänglich, beispielsweise für Anpassungen, eine Reparatur oder schlicht und ergreifend, um seine Funktion auf einfache Art und Weise optisch prüfen zu können. In jedem Fall wird die gesamte Strömungsmaschine unterhalb der Gewässeroberfläche im Schwebezustand gehalten.

Dies erreicht die Erfindung dadurch, dass der Rotor und die Düseneinheit vorteilhaft hängend an einem Traggerüst angebracht werden. Da das Traggerüst mittels des einen oder der mehreren Schwimmkörper in etwa an der Wasseroberfläche gehalten wird, ist sicher gestellt, dass der unterhalb des Traggerüstes befindliche Rotor und die Düseneinheit in jedem Fall in das Gewässer eintauchen. Denn das Traggerüst befindet sich an der Wasseroberfläche bzw. Gewässeroberfläche.

Zu diesem Zweck kann der Schwimmkörper hinsichtlich seiner erzeugten Auftriebskraft veränderbar ausgebildet werden. Dazu lässt sich der Schwimmkörper wahlweise mit einem gasförmigen Medium beaufschlagen und ggf. mit Wasser fluten. Bei dem gasförmigen Medium kann es sich um Druckluft handeln. Das ist allerdings nicht zwingend.

Im Allgemeinen sind zwei oder mehr Schwimmkörper realisiert, welche das Traggerüst zwischen sich in der Art eines Pontons bzw. einer Pontonbrücke aufnehmen. Da die Düseneinheit üblicherweise trogartig ausgebildet ist, finden sich die beiden Schwimmkörper jeweils in Längserstreckung neben der trogartigen Düseneinheit.

In diesem Zusammenhang können der Boden und/oder eine und/oder beide seitlichen Wände des Troges bzw. der trogartigen Düseneinheit verstellbar ausgebildet sein. Dabei wird man meistens mit einer oder mehreren verstellbaren Wänden der Düseneinheit einlaufseitig arbeiten.

D. h., die trogartige Düseneinheit ist regelmäßig an ihrem Einlauf für das innerhalb der Düseneinheit zu beschleunigende strömende Wasser mit der einen oder den mehreren verstellbaren Wänden ausgerüstet. Auf diese Weise lässt sich vorteilhaft der Eingangsquerschnitt der Düseneinheit je nach Wasseranfall verändern, beispielsweise vergrößern oder auch verringern. Als Folge hiervon kann die Strömungsgeschwindigkeit - wie bereits beschrieben - im Bereich des Verengungsquerschnittes und folglich im Bereich des Rotors mehr oder minder konstant gehalten werden.

Erfindungsgemäß ist der Rotor gegenüber der Düseneinheit ortsveränderbar bei der Erfindung gegenüber der Düseneinheit ortsveränderbar ausgelegt, nämlich dreidimensional gegenüber der Düseneinheit verstellbar. Auf diese Weise kann der Rotor an die tatsächlichen geografischen Gegebenheiten unschwer angepasst werden.

Als weitere Möglichkeit zur Variation schlägt die Erfindung vor, dass der Rotor gegenüber der Düseneinheit ortsveränderbar ausgelegt werden kann. So ist es beispielsweise denkbar, den Rotor dreidimensional gegenüber der Düseneinheit zu verstellen. Auf diese Weise kann der Rotor an die tatsächlichen geografischen Gegebenheiten unschwer angepasst werden.

Wie bereits erläutert, sind der Rotor und/oder die Düseneinheit an das von dem Schwimmkörper bzw. den beiden oder den noch mehr Schwimmkörpern getragene Traggerüst angeschlossen, und zwar hängend an dem fraglichen Traggerüst angebracht. Dadurch wird einerseits gewährleistet, dass das Traggerüst in etwa an der Wasseroberfläche gehalten wird und andererseits der Rotor unter die Wasseroberfläche bzw. Gewässeroberfläche in das strömende Gewässer eintaucht.

Die Verstellbarkeit des Rotors gegenüber der Düseneinheit kann beispielsweise mit Hilfe einer Hohlkammer respektive eines Hohlrohres realisiert werden. Mit Hilfe dieser Hohlkammer bzw. des Hohlrohres ist der Propeller üblicherweise an das Traggerüst angeschlossen. Durch diese Vorgehensweise wird nicht nur eine relativ gewichtssparende Auslegung erreicht, sondern kann die Hohlkammer bzw. das Hohlrohr zugleich in ihrem Inneren Ableitungen sowie eventuell Zuleitungen aufnehmen. Bei den Ableitungen handelt es sich in der Regel um elektrische Leitungen, welche die vom Generator erzeugte elektrische Energie abführen. Meistens bilden Rotor und Generator eine Baueinheit. Darüber hinaus ist es denkbar, eine Zuleitung zum Rotor über die Hohlkammer bzw. das Hohlrohr zu führen. Mit Hilfe dieser Zuleitung kann beispielsweise die Drehgeschwindigkeit des Rotors abgegriffen werden, welche ein Maß für die Strömungsgeschwindigkeit ist. Die Zuleitung mag in diesem Fall einen Drehzahlsensor beaufschlagen und abfragen.

Da die Strömungsgeschwindigkeit üblicherweise gemessen wird und möglichst konstant gehalten werden soll, lässt sich auf diese Weise und ohne zusätzlichen Sensor die Strömungsgeschwindigkeit über die Rotordrehzahl erfassen und regelnd in der Weise konstant halten, dass je nach Veränderung der Strömungsgeschwindigkeit entweder der Eingangsquerschnitt oder der Verengungsquerschnitt oder beide eine entsprechende Änderung erfahren. Es hat sich bewährt, wenn der Rotor strömungsendseitig der Düseneinheit angeordnet ist und in diese in etwa mittig eintaucht. Dadurch steht genügend Raum zur Verfügung, um das einlaufseitig der Düseneinheit von dieser aufgenommene Wasser bzw. die entsprechende Wassermenge zum Rotor zu führen und bis zum dortigen Verengungsquerschnitt entsprechend zu beschleunigen.

Um die Wasserkraftanlage bzw. die Strömungsmaschine insgesamt in beispielsweise einem Flussbett festzulegen, sind verschiedene Maßnahmen denkbar. So kann die Strömungsmaschine mit Hilfe eines Ankers am Boden des Flussbettes festgelegt werden. Alternativ oder zusätzlich ist aber auch eine Verankerung an einer oder beiden Ufern denkbar. Nach besonders vorteilhafter Ausgestaltung wird eine seitliche Führung der Strömungsmaschine in beispielsweise Spundbohlen favorisiert. Dadurch ist sichergestellt, dass die Strömungsmaschine ihre relative Position im Vergleich zum Flussbett beibehält und nicht beispielsweise strömungsbedingt eine Schrägstellung erfährt.

Die Strömungsmaschine kann insgesamt modular aufgebaut werden, um sie an die tatsächlichen Gegebenheiten besonders einfach und schnell anpassen zu können. Tatsächlich setzt sich das Modul im Regelfall aus dem einen oder den mehreren Schwimmkörpern, dem Traggerüst mit dem daran befestigten Rotor bzw. der Baueinheit aus Rotor und Generator und schließlich der am Traggerüst festgelegten Düseneinheit zusammen. Die vorerwähnten Bauteile können modular an der Einsatzstelle vereinigt werden, wobei die Position des Rotors gegenüber dem Schwimmkörper respektive der Düseneinheit ebenso veränderbar ist, wie die Position der Düseneinheit gegenüber den Schwimmkörpern. Dadurch lässt sich die erfindungsgemäße Wasserkraftanlage optimal an die tatsächlichen Gegebenheiten wie beispielsweise Wassertiefe, Uferbeschaffenheit, Strömungsgeschwindigkeit, Strömungsrichtung etc. des Gewässers anpassen.

Hierdurch wird eine Wasserkraftanlage zur Verfügung gestellt, die sich nicht nur an die aktuellen geografischen Gegebenheiten des zugehörigen Gewässers besonders einfach anpassen lässt. Sondern mit Hilfe der erfindungsgemäßen Wasserkraftanlage lassen sich auch Änderungen der Strömungsrichtung, eine Variation des Wasserstandes, der Strömungsgeschwindigkeit etc. einfach beherrschen und auffangen. Hierfür sorgt im Kern die Düseneinheit, welche über wenigstens eine verstellbare Wand verfügt. Mit Hilfe dieser verstellbaren Wand können der Eingangsquerschnitt und/oder Verengungsquerschnitt der Düseneinheit eine Anpassung erfahren. Diese Anpassung kann bei Bedarf sogar im Sinne einer Regelung durchgeführt werden, und zwar dergestalt, dass die gemessene Strömungsgeschwindigkeit zumindest im Bereich des Verengungsquerschnittes der Düseneinheit im Wesentlichen gleich beibehalten wird. Dadurch ist sichergestellt, dass der Rotor und der von dem Rotor angetriebene Generator durchweg mit der gleichen Drehzahl rotieren und folglich die erzeugte elektrische Energie praktisch konstant gehalten wird. Hierin sind die wesentlichen Vorteile zusehen.

Im Folgenden wird die Erfindung anhand einer lediglich eine Ausführungsbeispiel darstellenden Zeichnung näher erläutert; es zeigen:
Fig. 1 eine Wasserkraftanlage in perspektivischer Ansicht und
Fig. 2 eine Aufsicht auf den Gegenstand nach Fig. 1.

In den Figuren ist eine Wasserkraftanlage dargestellt, die zum Erzeugen elektrischer Energie dient. Die elektrische Energie wird durch Umwandlung von Strömungsenergie eines strömenden Gewässers 1 gewonnen. Bei dem strömenden Gewässer 1 handelt es sich vorliegend um einen Fluss 1, welcher in einem Flussbett 2 in der Strömungsrichtung S fließt. Um nun die Energie des Flusses 1 in elektrische Energie umzuwandeln, ist eine Strömungsmaschine 3, 4, 5, 6, 7 realisiert.

Die Strömungsmaschine 3, 4, 5, 6, 7 verfügt über einen Rotor 3, welcher von dem Fluss 1 in Rotationen versetzt wird und einen von dem Rotor 3 angetriebenen Generator 4. Mit Hilfe des Generators 4 wird der gewünschte elektrische Strom bzw. die elektrische Energie erzeugt, die über Ableitungen 8 abgeführt wird. Parallel zu den Ableitungen 8 oder der einen Ableitung 8 ist im Ausführungsbeispiel und nicht einschränkend noch eine Zuleitung 9 vorgesehen, mit deren Hilfe die Drehzahl des Rotors 3 gemessen und an eine Steuereinheit 10 übertragen wird.

Darüber hinaus weist die Strömungsmaschine 3, 4, 5, 6, 7 im Ausführungsbeispiel zwei Schwimmkörper 6 sowie schließlich eine Düseneinheit 5 auf. Die Düseneinheit 5 ist trogartig mit einem Boden 5a und zwei seitlichen Wänden 5b ausgebildet. Man erkennt, dass die Düseneinheit 5 im Querschnitt im Wesentlichen U-förmig gestaltet ist. Tatsächlich ist der Trog bzw. die trogartige Düseneinheit 5 nach oben hin offen ausgelegt, so dass man beispielsweise vom Ufer aus den Rotor 3 und den Generator 4 sowie deren Funktion unschwer überprüfen kann. Außerdem sind durch diese offene Gestaltung der Rotor 3 und der Generator 4 ummittelbar zugänglich.

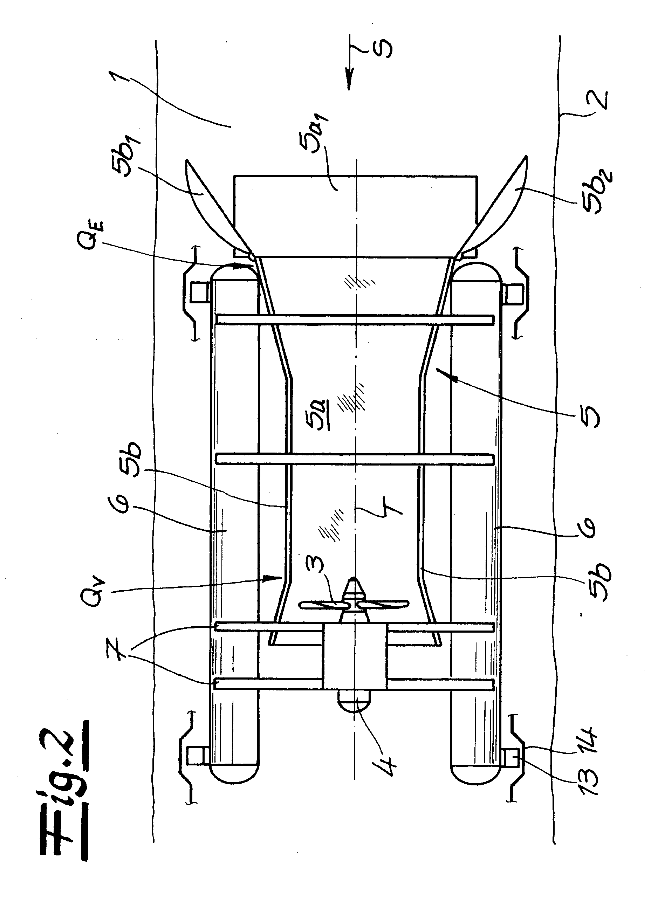

Erfindungsgemäß von besonderer Bedeutung ist der Umstand, dass die Düseneinheit 5 wenigstens eine verstellbare Wand 5a₁, 5b₁, 5b₂ aufweist. Im Ausführungsbeispiel sind insgesamt drei verstellbare Wände 5a₁, 5b₁ und 5b₂ realisiert. Tatsächlich sind zwei seitliche Wände bzw. Wandteile 5b₁, 5b₂ und ein Bodenwandteil 5a₁ verstellbar ausgelegt. Anhand der Aufsicht nach Fig. 2 erkennt man, dass die verstellbaren Wände 5a₁, 5b₁, 5b₂ im Bereich eines Eingangsquerschnittes Q_{E} der Düseneinheit 5 realisiert sind. Grundsätzlich könnten die verstellbaren Wände 5a₁, 5b₁, 5b₂ auch im Bereich eines Verengungsquerschnittes Q_{V} der Düseneinheit 5 verwirklicht werden. Im Bereich des Verengungsquerschnittes Q_{V} ist der Rotor 3 angeordnet. Ebenso der Generator 4, welcher mit dem Rotor 3 eine Baueinheit 3, 4 bildet.

Mit Hilfe der verstellbaren Wände 5a₁, 5b₁ und 5b₂ kann der Eingangsquerschnitt Q_{E} der Düseneinheit 5 im Beispiel variiert werden. Falls beispielsweise die beiden seitlichen Wandteile 5b₁, 5b₂ nach außen schwenken, so vergrößert sich der Eingangsquerschnitt Q_{E} der Düseneinheit 5. Das Gleiche gilt für den Fall, dass das Bodenwandteil 5a₁ nach unten in Richtung auf einen Boden des Flussbettes 2 hin bewegt wird. In jedem Fall korrespondiert diese Vergrößerung des Eingangsquerschnittes Q_{E} der Düseneinheit 5 dazu, dass die Menge an durch die Düseneinheit 5 strömendem Wasser des Flusses 1 pro Zeiteinheit gesteigert wird. Da diese gesamte Menge den Verengungsquerschnitt Q_{V} der Düseneinheit 5 passieren muss, geht die Vergrößerung des Eingangsquerschnittes Q_{E} bei ansonsten gleichen Bedingungen mit einer Erhöhung der Strömungsgeschwindigkeit im Bereich des Verengungsquerschnittes Qv einher. Dadurch wird normalerweise die über die Ableitung 8 abgegebene elektrische Energie erhöht.

Üblicherweise werden der Rotor 3 und der von dem Rotor 3 angetriebene Generator 4 im optimalen Bereich betrieben. Falls nun beispielsweise der Fluss 1 weniger Wasser führt, kann diesem Effekt dadurch begegnet werden, dass der Eingangsquerschnitt Q_{E} eine entsprechende Vergrößerung mit Hilfe der verstellbaren Wände 5a₁, 5b₁, 5b₂ erfährt. Auf diese Weise lässt sich die Strömungsgeschwindigkeit im Bereich des Verengungsquerschnittes Q_{V} in etwa gleichhalten. Zu diesem Zweck mag die Drehzahl des Rotors 3 mit Hilfe der Zuleitung 9 an die Steuereinheit 10 gemeldet werden. Bei einem Abfall der Drehzahl des Rotors 3 und folglich der Strömungsgeschwindigkeit des Flusses 1 im Bereich des Verengungsquerschnittes Q_{V} kann die Steuereinheit 10 dafür sorgen, dass die verstellbaren Wände 5a₁, 5b₁, 5b₂ einzeln oder gemeinsam über entsprechende Stellmotoren eine Variation dergestalt erfahren, bis die Strömungsgeschwindigkeit und folglich die Drehzahl des Rotors 3 einen vorgegebenen Wert (wieder) erreicht. Das mag im Sinne einer Regelung vorgenommen werden. Selbstverständlich können entsprechende Anpassungen auch rein manuell und ohne Stellmotoren vorgenommen werden.

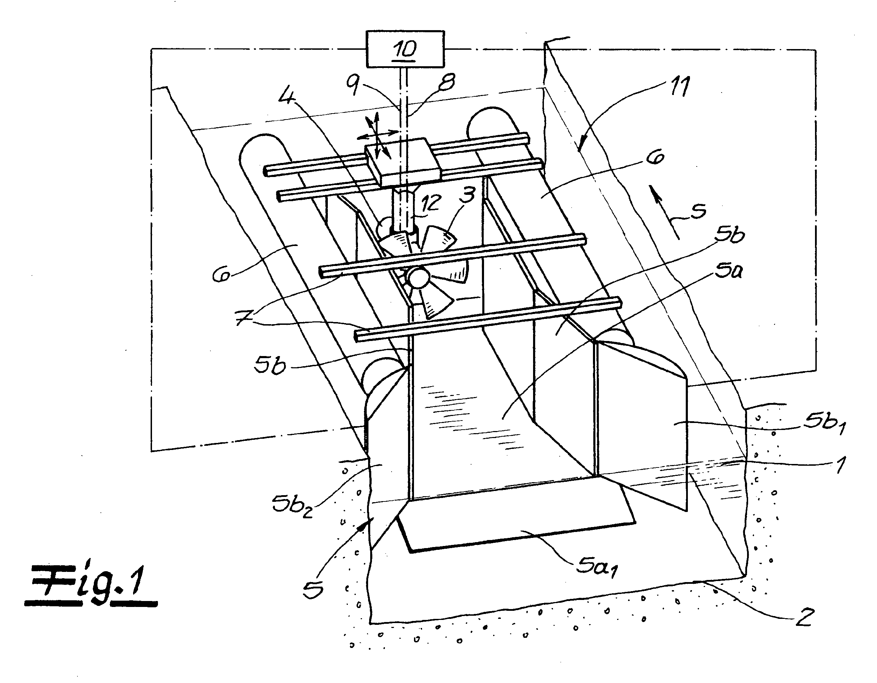

Der Rotor 3 ist gegenüber der Düseneinheit 5 ortsveränderbar ausgelegt. Tatsächlich lässt sich der Rotor 3 dreidimensional gegenüber der Düseneinheit 5 verstellen, wie durch entsprechende Pfeile in der Fig. 1 angedeutet ist. Dadurch ist einerseits sichergestellt, dass der Rotor 3 immer unterhalb einer Wasseroberfläche 11 angeordnet ist und andererseits in etwa mittig im Vergleich zu der Düseneinheit 5 bzw. im Bereich des Verengungsquerschnittes Q_{V}.

Um diese Verstellbarkeit des Rotors 3 im Detail zu erreichen, ist der Rotor 3 über eine Hohlkammer bzw. ein Hohlrohr 12 an das Traggerüst 7 angeschlossen. Das Hohlrohr bzw. die Hohlkammer 12 nimmt die Ableitung 8 und die Zuleitung 9 auf, die auf diese Weise sicher und beschädigungsfrei vom Rotor 3 bzw. dem Generator 4 zur Steuereinheit 10 bzw. zu einem Verbraucher geführt werden.

Bei einer vergleichenden Betrachtung der Fig. 1 und 2 erkennt man, dass der Rotor 3 und die Düseneinheit 5 jeweils hängend an dem Traggerüst 7 angebracht sind. Das Traggerüst 7 wird seinerseits mit Hilfe der Schwimmkörper 6 in etwa an der Wasseroberfläche 11 gehalten. Auf diese Weise ist sichergestellt, dass der Rotor 3 und auch die Düseneinheit 5 immer unterhalb der Wasseroberfläche 11 angeordnet sind.

Tatsächlich finden sich die beiden Schwimmkörper 6 in Längserstreckung beidseitig und neben der mittigen Düseneinheit 5. Dabei wird man meistens eine symmetrische Gestaltung im Vergleich zu einer Symmetrieebene T verfolgen, die in der Fig. 2 angedeutet ist. Die beiden Schwimmkörper 6 nehmen das Traggerüst 7 zwischen sich in der Art einer Pontonbrücke auf.

Der Propeller 3 taucht in etwa mittig in die Düseneinheit 5 ein, und zwar strömungsendseitig im Bereich des Verengungsquerschnittes Q_{V}. Zur Führung bzw. Verankerung der gesamten Strömungsmaschine 3, 4, 5, 6, 7 können seitliche Führungen 13, 14 verwirklicht werden, die in der Fig. 2 lediglich angedeutet sind. Bei diesen seitlichen Führungen 13, 14 handelt es sich im Ausführungsbeispiel um Führungsstangen 13, die beispielsweise im Inneren von Spundbohlen 14 geführt werden. Selbstverständlich sind auch andere Linearführungen 13, 14 denkbar, mit deren Hilfe die Strömungsmaschine 3, 4, 5, 6, 7 ortsfest und zugleich höhenbeweglich gegenüber dem Flussbett in dem Fluss 1 schwimmend bzw. schwebend gehalten wird.

Denn der eine oder die beiden Schwimmkörper 6 sind im Allgemeinen hinsichtlich ihrer jeweils erzeugten Auftriebskraft veränderbar ausgebildet. Dazu mag der jeweilige Schwimmkörper 6 mit einem gasförmigen Medium, beispielsweise Druckluft, beaufschlagt werden. Außerdem kann der Schwimmkörper 6 über einzelne oder mehrere Schwimmkammern verfügen, die sich mit Wasser fluten lassen. Auf diese Weise kann die Auftriebskraft an das Gewicht des Traggerüstes 7, der Düseneinheit 5 und schließlich der Baueinheit 3, 4 aus Propeller 3 und Generator 4 unschwer angepasst werden.

Tatsächlich ist die Strömungsmaschine 3, 4, 5, 6, 7 im allgemeinen modular aufgebaut. Sie setzt sich im Wesentlichen aus den beiden Schwimmkörpern 6, dem Traggerüst 7, der Düseneinheit 5 und schließlich der Baueinheit 3, 4 aus dem Propeller 3 und dem von dem Propeller 3 angetriebenen Generator 4 zusammen. Bei dem Traggerüst 7 handelt es sich im Ausführungsbeispiel um im Wesentlichen Querstreben 7, welche die Schwimmkörper 6 mit Abstand zueinander halten und zugleich zur Anbringung der Baueinheit 3, 4 aus dem Rotor 3 inklusive Generator 4 dienen und zwar mit Hilfe der Hohlkammer 12. Außerdem ist die Düseneinheit 5 bzw. der Trog mit den beiden Seitenwänden 5b und dem Boden 5a an den fraglichen Querstreben bzw. dem Traggerüst 7 befestigt.

## Patentansprüche

1. Wasserkraftanlage zum Erzeugen elektrischer Energie unter Umwandlung von Strömungsenergie eines strömenden Gewässers (1) mittels einer Strömungsmaschine (3, 4, 5, 6, 7) mit wenigstens
- einem Rotor (3),
- einem von dem Rotor (3) angetriebenen Generator (4),
- einem Schwimmkörper (6), und mit
- einer Düseneinheit (5) zur Erhöhung der Strömungsgeschwindigkeit im Bereich des Rotors (3),
wobei die Düseneinheit (5) wenigstens eine verstellbare Wand (5a₁; 5b₁; 5b₂) aufweist,
**dadurch gekennzeichnet, dass**
- der Rotor (3) dreidimensional verstellbar gegenüber der Düseneinheit (5) ausgelegt ist, um hierdurch
- einerseits den Rotor (3) immer unterhalb einer Wasseroberfläche (11) anzuordnen und andererseits in etwa mittig im Vergleich zur Düseneinheit (5).

2. Wasserkraftanlage nach Anspruch 1, **dadurch gekennzeichnet, dass** die Düseneinheit (5) trogartig mit Boden (5a) und seitlichen Wänden (5b) ausgebildet ist.

3. Wasserkraftanlage nach Anspruch 2, **dadurch gekennzeichnet, dass** der Boden (5a) und/oder eine seitliche Wand (5b) und/oder beide seitlichen Wände (5b) verstellbar ausgebildet sind.

4. Wasserkraftanlage nach Anspruch 3, **dadurch gekennzeichnet, dass** die verstellbare Wand (5a₁; 5b₁, 5b₂) der Düseneinheit (5) einlaufseitig vorgesehen ist.

5. Wasserkraftanlage nach einem der Ansprüche 1 bis 4, **dadurch gekennzeichnet, dass** der Rotor (3) und/oder die Düseneinheit (5) an ein von dem Schwimmkörper (6) getragenes Traggerüst (7) angeschlossen sind.

6. Wasserkraftanlage nach einem der Ansprüche 1 bis 5, **dadurch gekennzeichnet, dass** der Rotor (3) und die Düseneinheit (5) hängend an dem Traggerüst (7) angebracht sind.

7. Wasserkraftanlage nach einem der Ansprüche 1 bis 6, **dadurch gekennzeichnet, dass** das Traggerüst (7) mittels des Schwimmkörpers (6) in etwa an einer Wasseroberfläche (11) gehalten wird.

8. Wasserkraftanlage nach einem der Ansprüche 1 bis 7, **dadurch gekennzeichnet, dass** der Schwimmkörper (6) hinsichtlich seiner erzeugten Auftriebskraft veränderbar ausgebildet ist.

9. Wasserkraftanlage nach einem der Ansprüche 1 bis 8, **dadurch gekennzeichnet, dass** zwei oder mehr Schwimmkörper (6) realisiert sind, welche das Traggerüst (7) zwischen sich in der Art eines Pontons aufnehmen.

10. Wasserkraftanlage nach einem der Ansprüche 1 bis 9, **dadurch gekennzeichnet, dass** der Rotor (3) über eine Hohlkammer (12) an das Traggerüst (7) angeschlossen ist.

11. Wasserkraftanlage nach Anspruch 10, **dadurch gekennzeichnet, dass** die Hohlkammer (12) in ihrem Inneren Ableitungen (8) sowie Zuleitungen (9) vom oder zum Rotor (3) bzw. Generator (4) aufweist.

12. Wasserkraftanlage nach einem der Ansprüche 1 bis 11, **dadurch gekennzeichnet, dass** der Rotor (3) strömungsendseitig der Düseneinheit (5) in diese in etwa mittig eintaucht.

13. Wasserkraftanlage nach einem der Ansprüche 1 bis 12, **dadurch gekennzeichnet, dass** die Strömungsmaschine (3, 4, 5, 6, 7) modular aufgebaut ist.

## Claims

1. A hydroelectric powerplant for the generation of electrical energy with the conversion of flow energy of a flowing body of water (1) by means of a fluid kinetic machine (3, 4, 5, 6, 7) with at least
- one rotor (3),
- one generator (4) driven by the rotor (3),
- one floating body (6), and with
- one nozzle unit (5) for purposes of increasing the flow velocity in the region of the rotor (3), wherein
the nozzle unit (5) has at least one adjustable wall (5a₁; 5b₁; 5b₂), **characterised in that**,
- the rotor (3) is designed so as to be adjustable in three dimensions relative to the nozzle unit (5), in order hereby
- on the one hand to arrange for the rotor (3) to be always underneath a water surface (11), and on the other hand to be approximately central compared with the nozzle unit (5).

2. The hydroelectric powerplant in accordance with Claim 1,
**characterised in that**,
the nozzle unit (5) is designed in the form of a trough with a floor (5a) and lateral walls (5b).

3. The hydroelectric powerplant in accordance with Claim 2,
**characterised in that**,
the floor (5a) and/or one lateral wall (5b) and/or both lateral walls (5b) are designed so as to be adjustable.

4. The hydroelectric powerplant in accordance with Claim 3,
**characterised in that**,
the adjustable wall (5a₁; 5b₁, 5b₂) of the nozzle unit (5) is provided on the inlet side.

5. The hydroelectric powerplant in accordance with one of the Claims 1 to 4,
**characterised in that**,
the rotor (3) and/or the nozzle unit (5) are connected to a support structure (7) carried by the floating body (6).

6. The hydroelectric powerplant in accordance with one of the Claims 1 to 5,
**characterised in that**,
the rotor (3) and/or the nozzle unit (5) are mounted suspended from the support structure (7).

7. The hydroelectric powerplant in accordance with one of the Claims 1 to 6,
**characterised in that**,
by means of the floating body (6) the support structure (7) is held approximately on a water surface (11).

8. The hydroelectric powerplant in accordance with one of the Claims 1 to 7,
**characterised in that**,
the floating body (6) is designed such that the buoyancy force that it generates can be altered.

9. The hydroelectric powerplant in accordance with one of the Claims 1 to 8,
**characterised in that**,
two or more floating bodies (6) are implemented, which accommodate the support structure (7) between them in the manner of a pontoon.

10. The hydroelectric powerplant in accordance with one of the Claims 1 to 9,
**characterised in that**,
the rotor (3) is connected to the support structure (7) via a hollow chamber (12).

11. The hydroelectric powerplant in accordance with Claim 10,
**characterised in that**,
in its interior the hollow chamber (12) has discharge lines (8) and supply lines (9) from or to the rotor (3) and/or generator (4).

12. The hydroelectric powerplant in accordance with one of the Claims 1 to 11,
**characterised in that**,
the rotor (3) is immersed approximately centrally in the nozzle unit (5) at the flow exit side of the latter.

13. The hydroelectric powerplant in accordance with one of the Claims 1 to 12,
**characterised in that**,
the fluid kinetic machine (3, 4, 5, 6, 7) is constructed in a modular manner.

## Revendications

1. Centrale hydroélectrique pour générer de l'énergie électrique en transformant de l'énergie d'écoulement d'une eau courante (1) au moyen d'une turbomachine (3, 4, 5, 6, 7) avec au moins
- un rotor (3)
- un générateur (4) entraîné par le rotor (3),
- un corps flottant (6), et avec
- une unité de buse (5) pour augmenter la vitesse d'écoulement dans la zone du rotor (3),
dans laquelle l'unité de buse (5) présente au moins une paroi ajustable (5a₁ ; 5b₁ ; 5b₂),
**caractérisée en ce que**
- le rotor (3) est étudié pour être ajustable en trois dimensions par rapport à l'unité de buse (5) afin, de cette manière
- toujours disposer le rotor (3) en-dessous de la surface de l'eau (11) d'une part, et à peu près au milieu en comparaison avec l'unité de buse (5) d'autre part.

2. Centrale hydroélectrique selon la revendication 1, **caractérisée en ce que** l'unité de buse (5) est réalisée à la manière d'une cuve avec un fond (5a) et des parois (5b) latérales.

3. Centrale hydroélectrique selon la revendication 2, **caractérisée en ce que** le fond (5a) et/ou une paroi latérale (5b) et/ou les deux parois latérales (5b) sont réalisés de manière ajustable.

4. Centrale hydroélectrique selon la revendication 3, **caractérisée en ce que** la paroi ajustable (5a₁ ; 5b₁ ; 5b₂) de l'unité de buse (5) est prévue côté d'entrée.

5. Centrale hydroélectrique selon l'une des revendications 1 à 4, **caractérisée en ce que** le rotor (3) et/ou l'unité de buse (5) sont raccordés à un cadre de support (7) supporté par le corps flottant (6).

6. Centrale hydroélectrique selon l'une des revendications 1 à 5, **caractérisée en ce que** le rotor (3) et l'unité de buse (5) sont aménagés de manière suspendue au cadre de support (7).

7. Centrale hydroélectrique selon l'une des revendications 1 à 6, **caractérisée en ce que** le cadre de support (7) est maintenu au moyen du corps flottant (6) environ au niveau d'une surface de l'eau (11).

8. Centrale hydroélectrique selon l'une des revendications 1 à 7, **caractérisée en ce que** le corps flottant (6) est réalisé de manière variable concernant sa force portante générée.

9. Centrale hydroélectrique selon l'une des revendications 1 à 8, **caractérisée en ce que** deux ou davantage de corps flottants (6) sont réalisés, lesquels réceptionnent le cadre de support (7) entre eux à la manière d'un ponton.

10. Centrale hydroélectrique selon l'une des revendications 1 à 9, **caractérisée en ce que** le rotor (3) est raccordé via une chambre creuse (12) au cadre de support (7).

11. Centrale hydroélectrique selon la revendication 10, **caractérisée en ce que** la chambre creuse (12) présente en son intérieur des conduites de dérivation (8) ainsi que des conduites d'amenée (9) à partir du rotor (3) ou générateur (4) ou bien vers celui-ci.

12. Centrale hydroélectrique selon l'une des revendications 1 à 11, **caractérisée en ce que** le rotor (3) plonge à peu près au milieu dans l'unité de buse (5) du côté d'extrémité d'écoulement de celle-ci.

13. Centrale hydroélectrique selon l'une des revendications 1 à 12, **caractérisée en ce que** la turbomachine (3, 4, 5, 6, 7) est de construction modulaire.
